# EUROPEAN PATENT APPLICATION

(11) **EP 1 669 861 A2**
(43) Date of publication of application: **14.06.2006**
(21) Application number: 05250071.7
(22) Date of filing: 08.01.2005
(51) Int. Cl.: G06F 9/44, G06F 9/45

(54) **System and method for increasing throughput of a Java program**

(30) Priority: 14.01.2004 KR 2004002655
(71) Applicant: Samsung Electronics Co., Ltd., Suwon-si, Gyeonggi-Do (KR)
(72) Inventor: Park, Chong-mok, Songpa-gu Seoul (KR)
(74) Representative: Waddington, Richard

(57) **Abstract**

A system and method for increasing a throughput of a Java program. In the method, a class loader (110) transmits or loads a class file from a predetermined storage area to a memory in physical units having a predetermined size. A load-time compiler (120) links and compiles the class file that has been loaded in physical units by the class loader (110). When linking and compiling the class file, the load-time compiler (120) determines whether logical unit information is contained in the class file that has been transmitted to the memory in physical units, links the logical unit information, and when the logical unit information corresponds to a Java method, compiles the method.

## Description

The present invention relates to a system and method for increasing a throughput of a Java program, and more particularly, to a system and method for increasing a throughput of a Java program by simultaneously loading and compiling class files in a Java virtual machine.

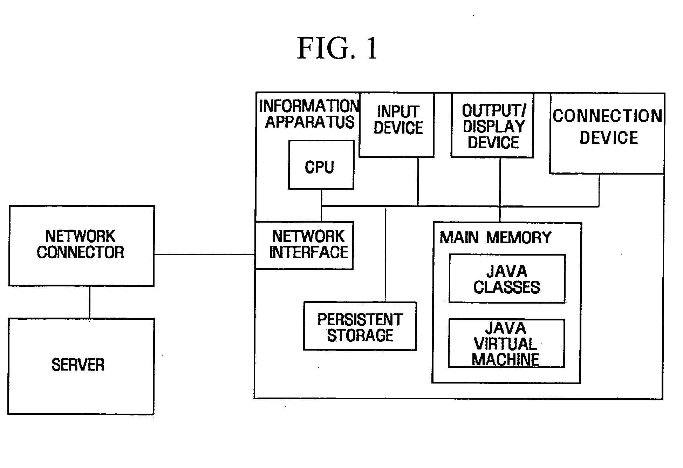

FIG. 1 illustrates a structure of a conventional information apparatus equipped with a Java virtual machine. The information apparatus may be a portable telephone, a personal digital assistant (PDA), a digital television (TV), a set-top box, a personal computer (PC), or the like.

The information apparatus includes a central processing unit (CPU), a network interface, a persistent storage such as a hard disc or a flash memory, a main memory, an input device, an output/display, and a connection device for connection of other devices.

The Java virtual machine resides in the main memory of the information apparatus, and Java classes constituting a Java application are loaded onto the main memory. The input device may be a keyboard or a mouse of a PC or a remote control receiver of a digital TV or a set-top box. The output/display device may be a graphic adaptor of a PC or a display device installed within or externally connected to a digital TV. The connection device may be a universal serial bus (USB), an IEEE 1394, an RF device, an infrared device, or a bluetooth device. As described above, an environment under which the Java virtual machine can be driven can be included in all types of information apparatus and is not limited to a particular type of apparatus.

Also, Java classes may be externally received through the network interface, may be received from the persistent storage, or may be received from an external device connected to the external device connector. The network interface connects the information apparatus to an external server through a particular network connector and transmits Java classes. A type of network may be a wired packet communication network such as a local area network (LAN) or a wide area network (WAN), a wireless/mobile communication network such as a wireless LAN, a wireless code division multiple access (CDMA) network, a wireless global system mobile (GSM) network, or a wireless general packet radio service (GPRS) network, or a wired/wireless broadcast network such as an over-the-air digital TV network, a cable TV network, or a satellite TV network. In other words, the type of network is not limited to a particular type but may be any one of various types of networks.

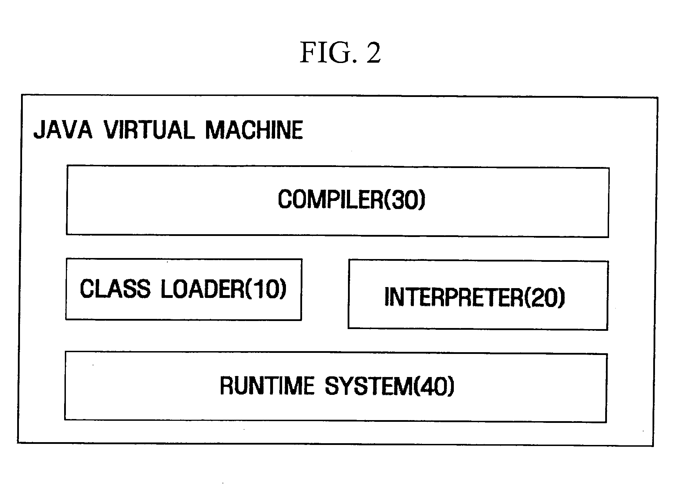

FIG. 2 illustrates a structure of a conventional Java virtual machine. The conventional Java virtual machine fundamentally includes a class loader 10, an interpreter 20, a compiler 30, and a runtime system 40.

The class loader 10 reads a Java class file from a network or a file system, appropriately disposes the Java class file in a memory according to internal information included in the Java class file, and initializes an internal state of the Java class file.

The interpreter 20 is provided to run executable codes included in the Java class file. More specifically, the interpreter 20 recognizes and executes Java byte-code instructions. In other words, the interpreter 20 recognizes and executes bytecodes of methods included in the Java class file read by the class loader 10.

The compiler 30 converts Java bytecodes into machine codes for a CPU installed in an information apparatus during execution of the Java class file. A Just-In-Time (JIT) compiler is widely used as the compiler 30. In other words, the compiler 30 converts the bytecodes of the methods included in the Java class file read by the class loader 10 into machine codes for the CPU.

The runtime system 40 associates and manages elements, i.e., the class loader 10, the interpreter 20, and the compiler 30, of the Java virtual machine.

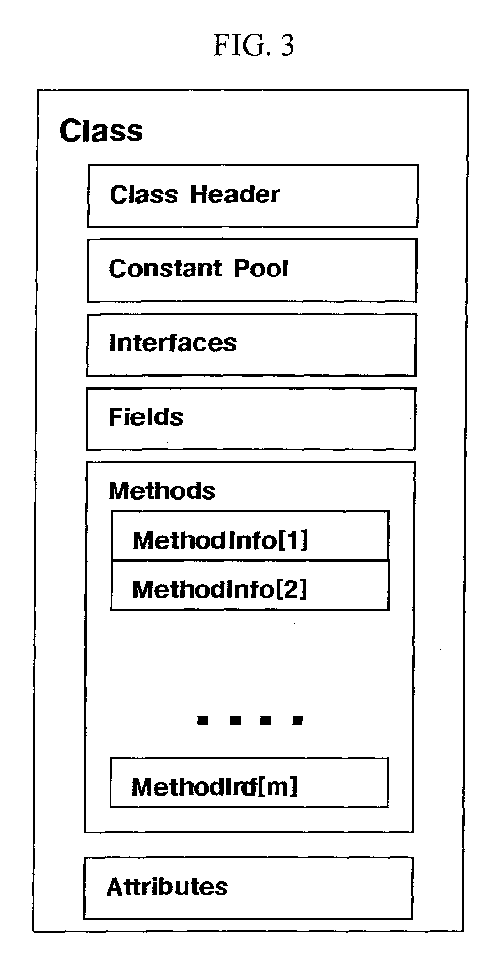

FIG. 3 illustrates a structure of a conventional Java class file.

Java classes are usually transmitted or stored in a particular file format named a class file. The class file includes various attributes of a class. The class file includes a class header indicating basic attributes of the class, a constant pool managing all of the constants, interfaces containing information regarding the interface of the class file, fields containing information regarding the fields, and methods containing an executable bytecode of each of the methods defined in the class file.

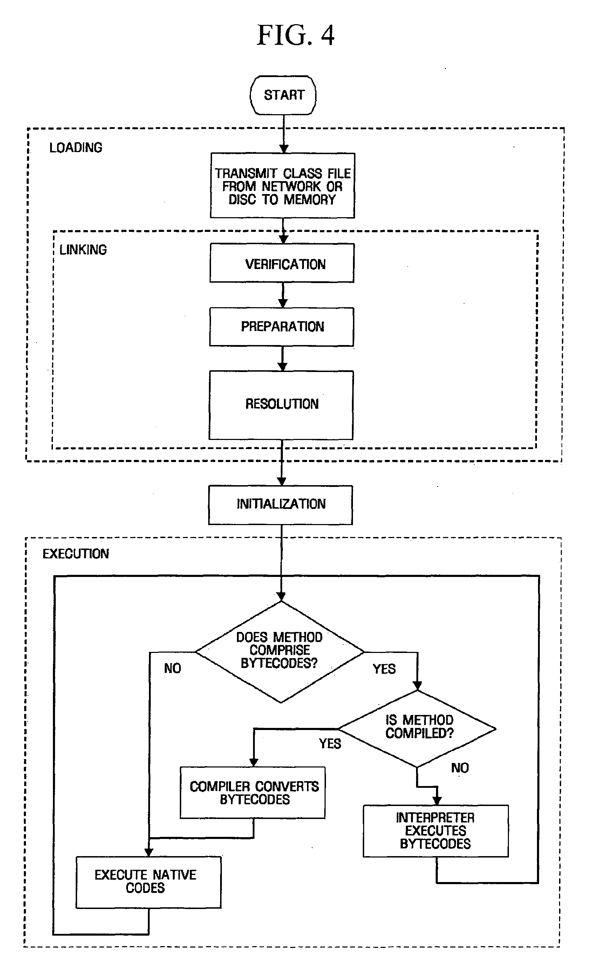

FIG. 4 is a flowchart of a procedure of transmitting and executing a Java class file in a conventional Java virtual machine. Transmitting the Java class file includes loading, initialization, and execution.

The loading includes transmitting the Java class file from a network or a disc to a memory and a linking process. The linking includes verification, preparation, and resolution.

The verification is a process of verifying whether a structure and content of the Java class file are correct. In this process, it is verified whether all of bytecodes contained in class methods are valid. The preparation is a process of setting a default value of a constant or a variable defined in a class. The resolution is a process of replacing symbols described in a constant pool with physical position information of resources necessary for the execution.

After the loading, the class file loaded into the memory is initialized and then executed. In the execution, an execution mode is determined according to a type of an executable code contained in the class.

When a method comprises bytecodes, it is determined whether to convert the bytecodes into machine codes for a CPU. When a determination is made not to convert the bytecodes into the machine codes, an interpreter directly reads and executes the bytecodes one by one. When a determination is made to convert the bytecodes into the machine codes, a compiler reads the bytecodes and converts them into the machine codes, and thereafter, the machine codes are directly executed.

Conventionally, transmission and linking of a class file are sequentially performed, and the linking is not performed until the class file is completely transmitted. For this reason, it takes a large amount of time to perform transmission, linking, initialization, and execution of a class file. More specifically, when a class file is transmitted through a network, time required for transmission of the class file changes depending on a bandwidth of the network or a size of the class file.

In addition, many CPU resources are consumed during verification of the class file in the linking process. Moreover, additional time is consumed in a process of compiling a method during the execution. In particular, as a more advanced compiling technique is used, time required for compiling increases. As a result, the entire performance of an application is deteriorated due to a series of such processes.

According to the present invention there is provided an apparatus and method as set forth in the appended claims. Preferred features of the invention will be apparent from the dependent claims, and the description which follows.

The present invention provides a system and method for increasing a throughput of a Java program by simultaneously performing loading and compiling of a class file in a Java virtual machine, thereby increasing entire performance of an application.

According to one aspect of the present invention, there is provided a system for increasing a throughput of a Java program. The system comprises a class loader which loads a class file of the Java program; and a load-time compiler which compiles the class file that is being loaded by the class loader.

According to another aspect of the present invention, there is provided a method of increasing a throughput of a Java program. The method comprises allowing a class loader to transmit a class file from a predetermined storage area to a memory in physical units having a predetermined size; determining whether logical unit information is contained in physical units of the class file that has been transmitted to the memory; and allowing a load time compiler to compile the logical unit information contained in the transmitted class file.

For a better understanding of the invention, and to show how embodiments of the same may be carried into effect, reference will now be made, by way of example, to the accompanying diagrammatic drawings in which:
FIG. 1 illustrates a structure of a conventional information apparatus equipped with a Java virtual machine;
FIG. 2 illustrates a structure of a conventional Java virtual machine;
FIG. 3 illustrates a structure of a conventional Java class file;
FIG. 4 is a flowchart of a procedure of transmitting and executing a Java class file in a conventional Java virtual machine;
FIG. 5 is a schematic diagram of a system for increasing a throughput of a Java program according to an embodiment of the present invention;
FIG. 6 is a schematic flowchart of a method of increasing a throughput of a Java program according to an embodiment of the present invention; and
FIG. 7 is a flowchart of compiling operations performed by a load-time compiler according to an embodiment of the present invention.

Korean Patent Publication No. 2000-0057010, entitled "Bytecode Execution Process, Method, Data Processing System, and Computer Program Products Implementing them", discloses a bytecode execution process which includes loading bytecodes for execution using a class loader, determining whether to compile the bytecodes, and transmitting the bytecodes to a JIT compiler or transmitting the bytecodes to an interpreter when a determination is made not to JIT compile the bytecodes. However, a method of simultaneously performing transmission, linking, and compiling of bytecodes in a process of loading the bytecodes has never been disclosed.

An exemplary embodiment of the present invention will now be described in detail with reference to the accompanying drawings.

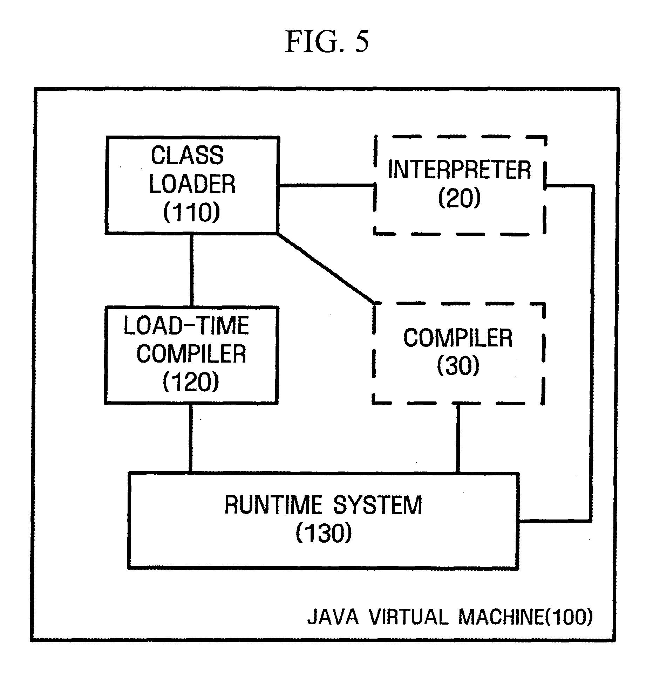

FIG. 5 is a schematic diagram of a system for increasing a throughput of a Java program according to an embodiment of the present invention. The system includes a class loader 110, a load-time compiler 120, and a runtime system 130.

The class loader 110 loads a class file of a Java program to a memory. More specifically, the class loader 110 loads a class file in physical units having a predetermined size from a predetermined storage area. In addition, the class loader 110 marks an amount of the class file that has been transmitted up to the present so that the load-time compiler 120 can refer to the amount of the transmitted class file when linking and compiling the class file. The predetermined storage area may be a remote system connected through a network or a disc. The class file is divided into units having a predetermined size, for example, packets when the class file is transmitted through the network or blocks when the class file is transmitted from the disc.
The load-time compiler 120 links and compiles the class file loaded by the class loader 110. More specifically, the load-time compiler 120 determines whether the class file that has been loaded in physical units by the class loader 110 up to the present contains logical unit information of a particular type, links the logical unit information, and when the logical unit information corresponds to a method, compiles bytecodes contained in the method. The load-time compiler 120 determines whether the class file loaded up to the present contains the logical unit information referring to a current amount of the transmitted class file that is marked by the class loader 110 and then links and compiles the class file. In other words, after the class loader 110 loads the class file from the storage area such as a remote system connected through a network or a disc to the memory and marks the amount of the class file transmitted up to the present, the load-time compiler 120 checks the marked amount of the transmitted class file and then links and compiles logical unit information of a particular type contained in the amount of the class file transmitted up to the present. Logical unit information may be one of class header information, constant pool information, interfaces information, fields information, and methods information which are comprised in the class file.

Also, the load-time compiler 120 performs verification, preparation, and resolution during linking and compiling.

The runtime system 130 manages resources needed to execute the class file. The class loader 110 and the load-time compiler 120 simultaneously operate using separate threads.

Meanwhile, the interpreter 20 and the compiler 30 used in the conventional Java virtual machine may be optionally included in or excluded from the Java virtual machine 100 of the present invention. In other words, when every class file is fundamentally compiled during a load time regardless of a type of class file in an embodiment of the present invention, the interpreter 20 and the compiler 30 are not needed. However, when a class file of a particular type or a class file method of a particular type is not compiled in another embodiment of the present invention, the interpreter 20 and the compiler 30 are needed to directly execute bytecodes and compile the bytecodes during execution.

In the embodiments of the present invention, the Java virtual machine 100 has been described. However, the present invention can be applied to other types of virtual machines, such as a Common Language Runtime (CLR) virtual machine of Microsoft and a Smalltalk virtual machine, providing functions equivalent to those of a Java virtual machine.

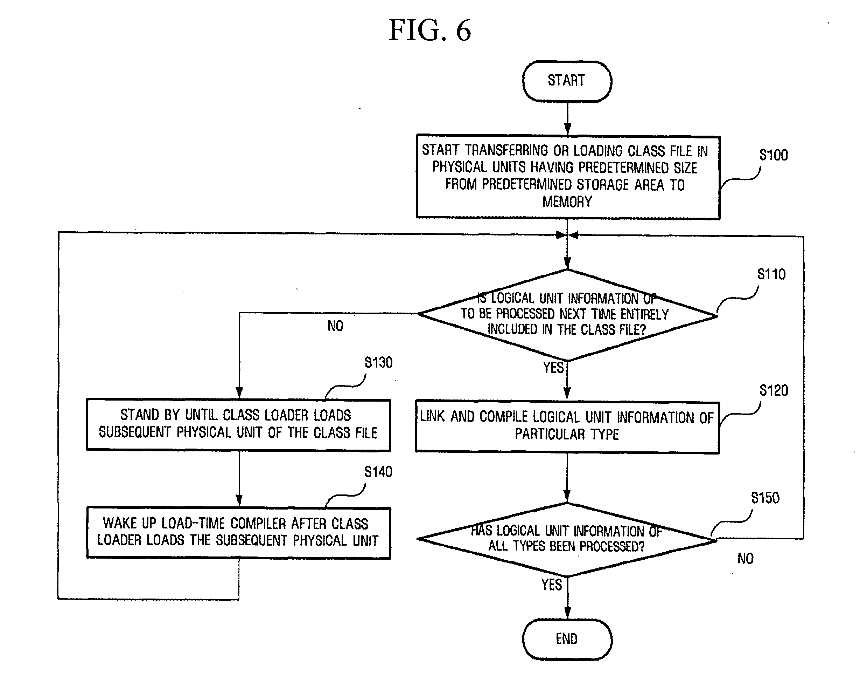

FIG. 6 is a schematic flowchart of a method of increasing a throughput of a Java program according to an embodiment of the present invention. Referring to FIGS. 5 and 6, the class loader 110 starts transferring or loading a class file in physical units having a predetermined size from a predetermined storage area to a memory in step S100. Here, the class loader 110 marks an amount of physical units of the class file that has been transmitted up to the present so that the load-time compiler 120 can refer to the marked amount of the transmitted class file when compiling the class file.

The load-time compiler 120 checks the marked amount of the class file transmitted up to the present and then determines whether all of the logical unit information of a particular type to be processed is contained in one or more physical units of the class file loaded to the memory in step S110. Here, the logical unit information may be one among class header information, constant pool information, interfaces information, fields information, and methods information which are comprised in the class file.

Next, when it is determined that all of the elogical unit information of the particular type is contained in the class file transmitted up to the present, the load-time compiler 120 links and compiles the logical unit information of the particular type in step S120. However, when it is determined that all of the logical unit information of the particular type is not contained in the class file transmitted up to the present, the load-time compiler 120 suspends a thread and stands by until the class loader 110 loads a subsequent physical unit of the class file to the memory in step S130.

After loading the subsequent physical unit of the class file, the class loader 110 marks an increment of the transmitted class file and wakes up the thread of the load-time compiler 120 in step S140. Steps S110, S120, S130, and S140 are repeated until the load-time compiler 120 processes logical unit information of all types contained in the whole class file in step S150.

Meanwhile, the class loader 110 and the load-time compiler 120 simultaneously operate using separate threads, respectively.

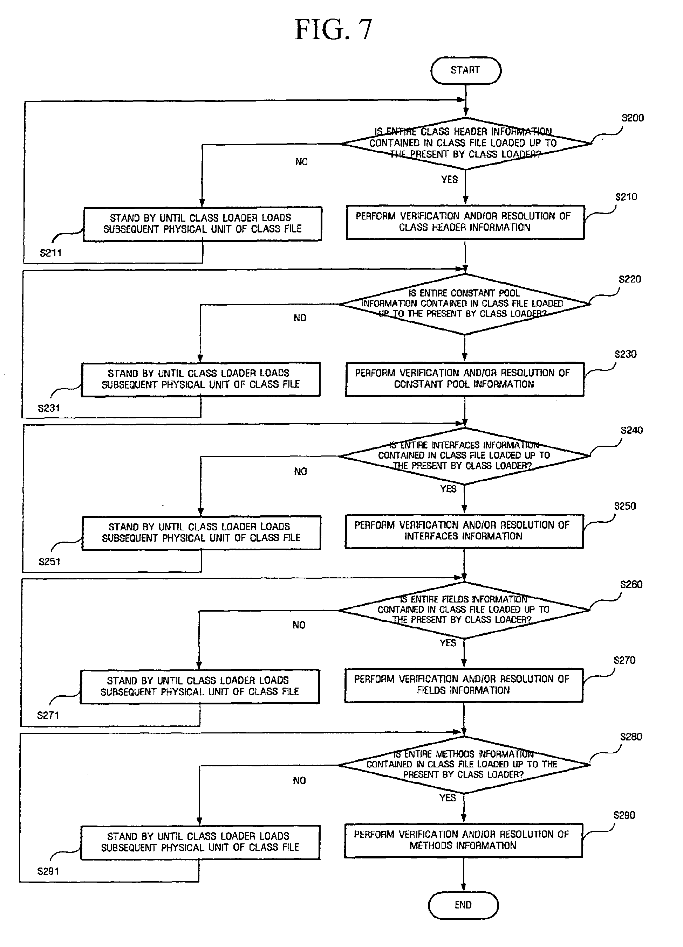

Hereinafter, a procedure for determining whether logical unit information of a particular type is included in a class file and a procedure for linking and compiling the class file, according to an embodiment of the present invention, will be described in detail with reference to FIG. 7.

FIG. 7 is a flowchart of linking and compiling operations performed by a load-time compiler according to an embodiment of the present invention. Steps shown in FIG. 7 may be applied to the method shown in FIG. 6 to determine whether logical unit information of a particular type is included in a class file and to link and compile the class file.

Referring to FIGS. 5 and 7, the load-time compiler 120 determines whether entire class header information corresponding to logical unit information to be processed is contained in a class file that has been loaded to a memory up to the present by the class loader 110 in step S200.

When it is determined that the entire class header information is contained in the current class file, linking, i.e., verification, of the class header information is performed in step S210. However, when it is determined that the entire class header information is not contained in the current class file, the load-time compiler 120 stands by until the class loader 110 loads a subsequent physical unit of the class file in step S211.

Next, in steps S220 through S291, it is determined whether constant pool information, interfaces information, fields information, and methods information are contained in the class file loaded up to the present by the class loader 110, linking of the constant pool information, the interfaces information, the fields information, and the methods information is performed, and subsequent physical units of the class file are loaded. Steps S220 through S291 are performed in the same manner as steps S200 through S211 are performed. However, compiling of bytecodes contained in a method may be additionally performed when the methods information is processed.

Having thus described certain embodiments of the present invention, various alterations, modifications and improvements will be apparent to those of ordinary skill in the art without departing from the spirit and scope of the present invention. Accordingly, the foregoing description and the accompanying drawings are not intended to be limiting.

As described above, according to the present invention, a Java virtual machine simultaneously performs loading and compiling of a class file so that the compiling is performed within a class file loading time, thereby improving overall execution performance of an application.

Also, according to the present invention, a time delay due to a compiling process performed after a class file is loaded can be minimized. In addition, since a class file method is directly executed using machine codes for a CPU, time for compiling performed after transmission and loading of a class file and execution time of a class can be reduced. Since a size of a class file processed during a single compiling operation is reduced as compared to a conventional compiling method, transmission time of the class file can be reduced.

Moreover, since the present invention allows an existing standard format of a class file to be utilized, an advantage of a virtual machine, i.e., portability, can be fully utilized.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A system for increasing a throughput of a Java program, the system comprising:
a class loader (110) which loads a class file of the Java program; and
a load-time compiler (120) which compiles the class file that is loaded by the class loader (110).

2. The system of claim 1, wherein the class file is loaded in a physical unit having a predetermined size.

3. The system of claim 1 or claim 2, wherein the load-time compiler (120) determines whether logical unit information to be processed next time is contained in the class file and, if contained, compiles the logical unit information.

4. The system of claim 3, wherein the logical unit information refers to any one of class header information, constant pool information, interfaces information, fields information, and methods information.

5. The system of claim 3 or claim 4, wherein the load-time compiler (120) verifies whether a structure and content of the Java class file are correct during compiling of the logical unit information.

6. The system of claim 3, claim 4 or claim 5, wherein the load-time compiler (120) performs preparation of setting default values of variables defined in at least one class during compiling of the logical unit information.

7. The system of any preceding claim, wherein the load-time compiler (120) performs resolution of reference values to one of methods and fields of at least one other class during compiling of the logical unit information.

8. The system of any preceding claim, wherein the class loader (110) and the load-time compiler (120) perform simultaneous operations using separate threads.

9. A method of increasing a throughput of a Java program, the method comprising:
at a class loader (110), transmitting a class file from a predetermined storage area to a memory in physical units having a predetermined size;
determining whether logical unit information is contained in physical units of the class file that has been transmitted to the memory; and
at a load-time compiler (120), compiling the logical unit information contained in the transmitted class file.

10. The method of claim 9, wherein the predetermined storage area refers to one of an external storage device and an information apparatus, wherein said one of the external storage device and the information apparatus are connected to a remote system connected through at least one of a network, a disc, and an external connection device.

11. The method of claim 10, wherein said external connection device comprises at least one of a universal serial bus (USB) connector, an IEEE 1394 connector, a RF connector, an infrared connector, and a Bluetooth connector.

12. The method of any one of claims 9 to 11, wherein the logical unit information comprises at least one of class header, constant pool, interfaces, fields, and methods.

13. The method of any one of claims 9 to 12, wherein the operations of the class loader (110) and the load-time compiler (120) are simultaneously performed using separate threads.

14. The method of any one of claims 9 to 13, wherein the determining step includes standing by to transmit a subsequent physical unit of the class file when it is determined that all of the logical unit information is not contained in the class file transmitted to the memory.

15. The method of any one of claims 9 to 14, wherein the compiling step includes verifying whether a structure and content of the Java class file are correct during compiling of the logical unit information.

16. The method of any one of claims 9 to 15, wherein the compiling step includes performing preparation of setting default value of variables defined in a class during compiling of the logical unit information.

17. The method of any one of claims 9 to 16, wherein the compiling step includes performing resolution of reference values to one of methods and fields of at least one other class during compiling of the logical unit information.
